# EUROPEAN PATENT SPECIFICATION

(11) **EP 4 540 317 B1**
(45) Date of publication and mention of the grant of the patent: **23.09.2026**
(21) Application number: 22740279.9
(22) Date of filing: 16.06.2022
(51) Int. Cl.: C08L 63/00, C09J 163/00

(54) **ONE-COMPONENT THERMOSETTING EPOXY ADHESIVE WITH IMPROVED ADHESION**
EINKOMPONENTIGER HITZEHÄRTENDER EPOXIDKLEBSTOFF MIT VERBESSERTER HAFTUNG
ADHÉSIF ÉPOXY THERMODURCISSABLE MONOCOMPOSANT À ADHÉRENCE AMÉLIORÉE

(43) Date of publication of application: 23.04.2025
(73) Proprietor: Sika Technology AG, 6340 Baar (CH)
(72) Inventor: ZHANG, Weiming, Suzhou, Jiangsu 215121 (CN); JENDOUBI, Elyes, Tokyo 107--0051 (JP); LIN, Xuefang, Suzhou, Jiangsu 215121 (CN)
(74) Representative: Sika Patent Attorneys
(86) International application number: PCT/CN2022/099181
(87) International publication number: WO 2023/240541

(56) References cited:
- WO-A1-2010/098950
- WO-A1-2022/093365

## Description

### Technical field

The present invention pertains to the field of one-component thermosetting epoxy resin adhesives and also to the use thereof particularly in vehicle construction.

### Prior art

Thermosetting, one-component epoxy resin adhesives have already been used for some considerable time as adhesives in body construction. One important field of use of one-component thermosetting epoxy resin adhesives, accordingly, is in vehicle construction, where typically there are metal substrates such as steel sheets and aluminium present, particularly in the context of adhesive bonding. Following the application of the epoxy resin composition, the bodywork is heated in the CEC (cathodic electrocoating) oven, by means of which the thermosetting epoxy resin composition as well is cured.

A common practice in the automotive industry is to manufacture parts in one country or region, then export and/or ship to another location (e.g., country or region) for final assembly. This is called CKD (complete knock-down). In a CKD system, parts may be partially assembled prior to shipping to the location of final assembly. In particular, in a first location (e.g., an auto parts factory), components may be bonded together using an epoxy adhesive, which is then preferably partially cured, e.g., with elevated temperature. The partially assembled components are then shipped to a second location, e.g., the location of final assembly. Typically, additional assembly takes place at the second location, and then the curing process (preferably begun in the first location), is completed.

A common problem is that if a part used in the automotive body is adhesively bonded at the first location, the adhesive needs to fulfil special performance criteria concerning the humidity resistance such that the article assembled at the second location meets product and manufacturing specifications, especially with respect to lap shear strength performance. Especially if such uncured or partially cured articles are stored or transported at elevated temperature and humidity, e.g. 40 °C with 80 % relative humidity, the lap shear strength of the finally cured article is significantly reduced compared to an article immediately cured after assembly.

WO 2012158336 A1 describes thermosetting, one-component epoxy resin adhesives with an excess of dicyandiamide hardener compared to epoxy functional groups for improved lap shear strength after CKD aging. WO 2010098950 A1 describes thermosetting, one-component epoxy resin adhesives containing an epoxy-functional fatty acid oligomer and a semi-crystalline or crystalline polyester polyol for increased storage stability.

WO 2004055092 A1 and WO2005007720 A1 disclose thermosetting, one-component epoxy resin adhesives containing an epoxy-functional fatty acid oligomer. Said compositions display high impact peel values, especially at low temperatures.

### Summary of the invention

It is an object of the present invention, therefore, to provide a one-component thermosetting epoxy resin adhesive which shows little reduction in the lap shear strength performance if stored in the uncured state at elevated temperature and humidity, preferably 1 week at 40 °C with 80 % relative humidity, compared to the adhesive immediately cured after application.

Surprisingly it has been found that this object can be achieved with the one-component thermosetting epoxy resin adhesive as defined in Claim 1.

Further aspects of the invention are subjects of further independent claims. Particularly preferred embodiments of the invention are subjects of the dependent claims.

### Certain embodiments of the invention

The present invention therefore relates to a one-component thermosetting epoxy resin adhesive, comprising
a) at least one epoxy resin A of the formula (II) 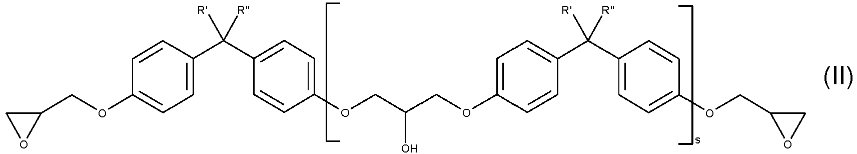 wherein the substituents R' and R" independently of one another are either H or CH₃ and the index s has a value of 0 - 12, preferably 0 - 1, the fraction of the epoxy resin **A** being from 25 - 70 wt.-%, based on the total weight of the one-component thermosetting epoxy resin adhesive; and
b) at least one epoxy-functionalized fatty acid oligomer **EFA;** and
c) at least one latent hardener **B** for epoxy resins; and
d) preferably at least one accelerator **C** for epoxy resins; and
e) at least at least one terminally blocked polyurethane polymer **D1;**
f) less than 5 wt.-%, based on the total weight of the one-component thermosetting epoxy resin adhesive, of liquid rubbers **D2;** and
g) less than 1.5 wt.-%, based on the total weight of the one-component thermosetting epoxy resin adhesive, of a crystalline or semi-crystalline polyester polyol **PP** having a hydroxyl equivalent weight of from 500 to 10,000 and which preferably has a crystalline melting temperature of from 40 to 125°C;
wherein the weight ratio of the terminally blocked polyurethane polymer **D1** to the epoxy-functionalized fatty acid oligomer **EFA (D1/EFA)** is from 4 - 20 and the sum of the total amount of the terminally blocked polyurethane polymer **D1** and the epoxy-functionalized fatty acid oligomer **EFA (D1+EFA)** is from 10 - 17.5 wt.-%, based on the total weight of the one-component thermosetting epoxy resin adhesive.

The epoxy resin adhesive is one-component, meaning that the constituents of the epoxy resin adhesive, more particularly the epoxy resin and the hardener, are present in one component, without curing taking place at usual ambient temperature or room temperature. The one-component epoxy resin adhesive is therefore storage-stable. It can therefore be handled in this form, whereas with two-component systems the components cannot be mixed until immediately prior to use.

The curing of the one-component epoxy resin adhesive is accomplished by heating, typically at a temperature of more than 70°C, as in the range from 100 to 220°C, for example.

The prefix "poly" in expressions such as polyol or polyisocyanate denotes that the compound has two or more of the stated groups. A polyisocyanate, for example, is a compound having two or more isocyanate groups.

The expression "independently of one another" as used below means that in the same molecule, two or more identically denoted substituents may have identical or different meanings in accordance with the definition.

The dashed lines in the formulae in this document represent in each case the bond between the substituent in question and the associated remainder of the molecule.

Room temperature refers here to a temperature of 23°C, unless otherwise indicated.

The thermosetting one-component epoxy resin adhesive comprises at least one epoxy resin **A** of the formula (II) 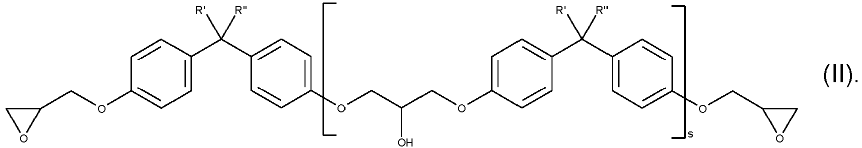 The substituents R' and R" independently of one another are either H or CH₃, preferably CH₃, and the index s has a value of 0 - 12, preferably 0 - 1, more preferably 0 - 0.2.
Preferably, in the epoxy resin **A** the substituents R' and R" are CH₃ and the index s has a value of 0 - 1, preferably 0 - 0.2.
The fraction of the epoxy resin **A** is from 25 - 70 wt.-%, based on the total weight of the one-component thermosetting epoxy resin adhesive, preferably from 25 -70 wt.-%, 30 -60 wt.-%, 35 - 55 wt.-%, more preferably 40 -50 wt.-%.

The resins in question are therefore preferably diglycidyl ethers of bisphenol A (DGEBA), of bisphenol F and also of bisphenol A/F. Liquid resins of these kinds are available for example as Araldite^{®} GY 250, Araldite^{®} PY 304, Araldite^{®} GY 282 (Huntsman) or D. E. R. ^{™} 331 or D. E. R. ^{™} 330 (Dow) or Epikote 828 (Hexion).

Preferably, the thermosetting one-component epoxy resin adhesive further comprises at least one epoxy-bearing reactive diluent **G.** Such reactive diluents are known to those skilled in the art. Preferred examples of epoxy-bearing reactive diluents are:
- glycidyl ethers of monofunctional saturated or unsaturated, branched or unbranched, cyclic or open-chain C₄-C₃₀ alcohols, e.g. butanol glycidyl ether, hexanol glycidyl ether, 2-ethylhexanol glycidyl ether, allyl glycidyl ether, tetrahydrofurfuryl and furfuryl glycidyl ether, trimethoxysilyl glycidyl ether etc.;
- glycidyl ethers of difunctional saturated or unsaturated, branched or unbranched, cyclic or open-chain C₂-C₃₀ alcohols, for example ethylene glycol glycidyl ether, butanediol glycidyl ether, hexanediol glycidyl ether, octanediol glycidyl ether, cyclohexanedimethanol diglycidyl ether, neopentyl glycol diglycidyl ether etc.;
- glycidyl ethers of tri- or polyfunctional, saturated or unsaturated, branched or unbranched, cyclic or open-chain alcohols, such as epoxidized castor oil, epoxidized trimethylolpropane, epoxidized pentaerythritol or polyglycidyl ethers of aliphatic polyols such as sorbitol, glycerol or trimethylolpropane etc.;
- glycidyl ethers of phenol compounds and aniline compounds, such as phenyl glycidyl ether, cresyl glycidyl ether, p-tert-butylphenyl glycidyl ether, nonylphenol glycidyl ether, 3-n-pentadecenyl glycidyl ether (from cashewnutshell oil), N,N-diglycidylaniline, etc.;
- epoxidized amines such as N,N-diglycidylcyclohexylamine etc.;
- epoxidized mono- or dicarboxylic acids, such as glycidyl neodecanoate, glycidyl methacrylate, glycidyl benzoate, diglycidyl phthalate, tetrahydrophthalate and hexahydrophthalate, diglycidyl esters of dimeric fatty acids etc.;
- epoxidized di- or trifunctional, low to high molecular weight polyether polyols, such as polyethylene glycol diglycidyl ether, polypropylene glycol diglycidyl ether etc.

Particular preference is given to hexanediol diglycidyl ether, cresyl glycidyl ether, p-tert-butylphenyl glycidyl ether, polypropylene glycol diglycidyl ether and polyethylene glycol diglycidyl ether.

Preferably, the fraction of the epoxy-bearing reactive diluent **G** is from 1 - 10 wt.-%, 1.5 - 7.5 wt.-%, 2 - 5 wt.-%, more preferably 2 - 3 wt.-%, based on the total weight of the one-component thermosetting epoxy resin adhesive.

The thermosetting one-component epoxy resin adhesive further comprises at least one latent hardener **B** for epoxy resins. Latent hardeners are substantially inert at room temperature and are activated by elevated temperature, typically at temperatures of 70°C or more, thereby initiating the curing reaction. The customary latent hardeners for epoxy resins can be used. Preference is given to a latent epoxy resin hardener **B** containing nitrogen.

The latent hardener **B** is preferably selected from dicyandiamide, guanamines, guanidines, aminoguanidines and derivatives thereof, substituted ureas, imidazoles and amine complexes, preferably dicyandiamide.

The latent hardener **B** is preferably used in a stoichiometric amount based on the epoxy groups in the composition. The molar ratio of the epoxy groups to the active hydrogen of the latent hardener **B** is preferably 0.8 to 1.2, in particular 0.9 to 1.1, preferably 0.95 to 1.05.

The fraction of the latent hardener **B** is preferably 0.5 to 12 wt%, more preferably 1 to 8 wt%, more particularly 2-6 wt%, based on the total weight of the epoxy resin adhesive.

The thermosetting one-component epoxy resin adhesive further comprises at least one accelerator **C** for epoxy resins.

Such accelerating curing agents are preferably substituted ureas, for example 3-(3-chloro-4-methylphenyl)-1,1-dimethylurea (chlortoluron) or phenyldimethylureas, especially p-chlorophenyl-N,N-dimethylurea (monuron), 3-phenyl-1,1-dimethylurea (fenuron) or 3,4-dichlorophenyl-N,N-dimethylurea (diuron). In addition, it is possible to use compounds from the class of the imidazoles, such as 2-isopropylimidazole or 2-hydroxy-N-(2-(2-(2-hydroxyphenyl)-4,5-dihydroimidazol-1-yl)ethyl)benzamide, imidazolines, trihalide complexes, preferably BF₃ complexes, blocked amines and encapsulated amines.

Preferably, the accelerator **C** for epoxy resins is selected from the list consisting of substituted ureas, imidazoles, imidazolines and blocked amines, preferably substituted ureas.

More preferably, the accelerator **C** for epoxy resins is selected from the list consisting of substituted ureas and blocked amines, especially when the latent hardener **B** is a guanidine, especially dicyandiamide.

Most preferably, the latent hardener **B** is a guanidine, especially dicyandiamide, and the one-component thermosetting epoxy resin composition additionally includes an accelerator **C** for epoxy resins, selected from the list consisting of substituted ureas and blocked amines, especially substituted ureas.

Preferably, the fraction of the accelerator **C** for epoxy resins is from 0.05 - 2 wt.-%, preferably 0.1 - 1 wt.-%, more preferably 0.15 - 0.5 wt.-%, based on the total weight of the one-component thermosetting epoxy resin adhesive.

The one-component thermosetting epoxy resin adhesive comprises b) at least one epoxy-functionalized fatty acid oligomer **EFA.**

The epoxy-functionalized fatty acid oligomer is an oligomeric unsaturated fatty acid, in which the carboxylic acid groups have been capped or otherwise converted to introduce terminal epoxide groups.

The oligomeric fatty acid preferably has a degree of polymerization of from about 2 to about 4. The starting fatty acid preferably has from 14 to 24 carbon atoms, more preferably from 16 to 18 carbon atoms.

The oligomer preferably is hydrogenated to remove any residual carbon-carbon double bonds that may be present after the oligomerization reaction.

Preferred oligomeric fatty acids are the so-called "dimer fatty acid" products that are readily commercially available. Those dimer fatty acid products have an average degree of polymerization of from 1.9 to 2.5, from about 1.9 to 2.5 carboxylic acid groups per molecule and from 32 to 45 carbon atoms.

The epoxy-functionalized fatty acid oligomer can be prepared by capping the carboxylic acid groups with a polyepoxide, preferably any of the epoxy resin materials described hereinbefore as epoxy resin **A** of the formula (II).

Preferably, the epoxy-functionalized fatty acid oligomer **EFA** is a dimer fatty acid having from 32 to 45 carbon atoms and from 1.9 to 2.5 carboxyl groups per molecule in which the carboxylic acid groups have been capped with a polyepoxide, preferably an epoxy resin **A** of the formula (II).

It is preferred to conduct the capping reaction with at least one mole of the polyepoxide per equivalent of carboxylic acid groups in the oligomeric fatty acid, to cap the carboxylic acid groups without significant chain extension. A greater excess of the polyepoxide is more preferred, as this leads to a product that includes the epoxy-functionalized fatty acid oligomer and some quantity of excess, unreacted polyepoxide.

The epoxy-functionalized fatty acid oligomer **EFA** preferably constitutes from 3 to 8 wt.-% of the total weight of the one-component thermosetting epoxy resin adhesive. A preferred amount is from 5 to 7 wt.-% of the total weight of the one-component thermosetting epoxy resin adhesive.

For purposes of this invention, the weight of the epoxy-functionalized fatty acid oligomer **EFA** does not include any excess, unreacted polyepoxide that may be present. Any such excess polyepoxide, if falling under the definition of epoxy resin **A** of the formula (II), counts as part of the epoxy resin **A** of the formula (II) portion of the structural adhesive. In the case in which the epoxy-functionalized fatty acid oligomer **EFA** is formed by capping a fatty acid oligomer with a polyepoxide, the weight of the epoxy-functionalized fatty acid oligomer **EFA** can be calculated as the weight of the starting fatty acid oligomer plus the weight of one mole of the polyepoxide per equivalent of the fatty acid oligomer used in the capping reaction.

The one-component thermosetting epoxy resin adhesive comprises g) less than 1.5 wt.-%, based on the total weight of the one-component thermosetting epoxy resin adhesive, of a crystalline or semi-crystalline polyester polyol **PP** having a hydroxyl equivalent weight of from 500 to 10,000, preferably from 1000 to 4000, and which preferably has a crystalline melting temperature of from 40 to 125°C. The crystalline melting temperature is preferably determined by differential scanning calorimetry (DSC). Such crystalline or semi-crystalline polyester polyol **PP** preferably contain from 1.8 to 4, preferably from 1.8 to 2.5 hydroxyl groups per molecule, on average. Suitable polyester polyols include those available commercially from Evonik Industries under the trade name Dynacoll^{™}. Specific polyester polyol products include Dynacoll^{™} 7300, Dynacoll^{™} 7380 and Dynacoll^{™} 7381.

Preferably, the amount less than 1.0 wt.-%, preferably less than 0.5 wt.- %, more preferably less than 0.1 wt.-%, based on the total weight of the one-component thermosetting epoxy resin adhesive. Most preferably, the one-component thermosetting epoxy resin adhesive is free of such crystalline or semi-crystalline polyester polyol **PP.**

The one-component thermosetting epoxy resin adhesive comprises e) at least at least one terminally blocked polyurethane polymer **D1.**

It is preferably a terminally blocked polyurethane prepolymer of the formula (I).

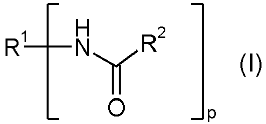

In this formula, R¹ is a p-valent radical of a linear or branched polyurethane prepolymer terminated by isocyanate groups, following the removal of the terminal isocyanate groups, and p has a value of 2 to 8.

Moreover, R² independently at each occurrence is a substituent which is selected from the group consisting of

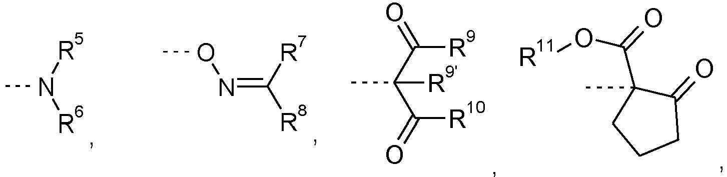

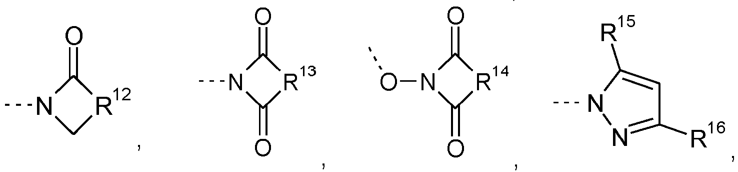

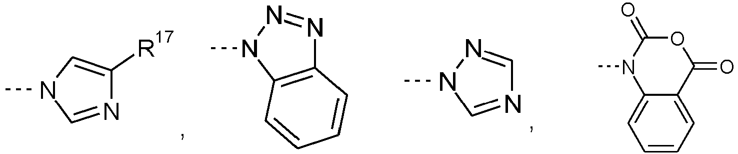

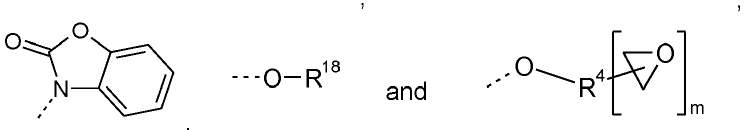

**In** these formulae, R⁵, R⁶, R⁷ and R⁸ each independently of one another are an alkyl or cycloalkyl or aralkyl or arylalkyl group, or R⁵ together with R⁶, or R⁷ together with R⁸, forms part of a 4- to 7-membered ring which is optionally substituted.

Moreover, R^{9'} and R¹⁰ each independently of one another are an alkyl or aralkyl or arylalkyl group or are an alkyloxy or aryloxy or aralkyloxy group, and R¹¹ is an alkyl group.

R¹², R¹³ and R¹⁴ each independently of one another are an alkylene group having 2 to 5 carbon atoms, which optionally has double bonds or is substituted, or are a phenylene group or are a hydrogenated phenylene group.

R¹⁵, R¹⁶ and R¹⁷ each independently of one another are H or are an alkyl group or are an aryl group or an aralkyl group, and R¹⁸ is an aralkyl group or is a mono- or polycyclic, substituted or unsubstituted aromatic group which optionally has aromatic hydroxyl groups.

Lastly, R⁴ is a radical of an aliphatic, cycloaliphatic, aromatic or araliphatic epoxide containing a primary or secondary hydroxyl group, after the removal of the hydroxyl and epoxide groups, and m has a value of 1, 2 or 3.

R¹⁸ should be considered to comprise, in particular, on the one hand, phenols or polyphenols, more particularly bisphenols, after removal of a hydroxyl group. Preferred examples of such phenols and bisphenols are, in particular, phenol, cresol, resorcinol, pyrocatechol, cardanol (3-pentadecenylphenol (from cashew nut shell oil)), nonylphenol, phenols reacted with styrene or with dicyclopentadiene, bisphenol A, bisphenol F and 2,2'-diallylbisphenol A. R¹⁸ should be considered on the other hand to comprise, in particular, hydroxybenzyl alcohol and benzyl alcohol after removal of a hydroxyl group.

If R⁵, R⁶, R⁷, R⁸, R⁹, R⁹, R¹⁰, R¹¹, R¹⁵, R¹⁶ or R¹⁷ is an alkyl group, this group more particularly is a linear or branched C₁-C₂₀ alkyl group.

If R⁵, R⁶, R⁷, R⁸, R⁹, R^{9'}, R¹⁰, R¹⁵, R¹⁶, R¹⁷ or R¹⁸ is an aralkyl group, this moiety is more particularly an aromatic group bonded via methylene, more particularly a benzyl group.

If R⁵, R⁶, R⁷, R⁸, R⁹, R^{9'} or R¹⁰ is an alkylaryl group, this group is more particularly C₁ to C₂₀ alkyl group bonded via phenylene, such as tolyl or xylyl, for example.

The radicals R² are preferably the substituents of the formulae

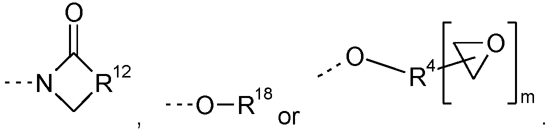

A preferred substituent of the formula 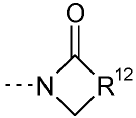 is ε-caprolactam after removal of the NH proton.

Preferred substituents of the formula 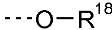 are monophenols or polyphenols, more particularly bisphenols, after removal of a phenolic hydrogen atom. Particularly preferred examples of such radicals R² are radicals which are selected from the group consisting of

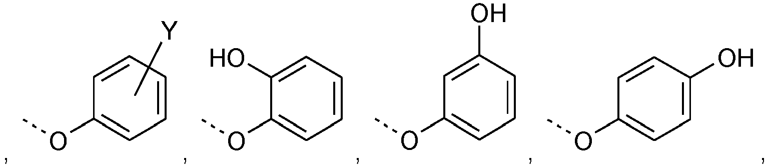

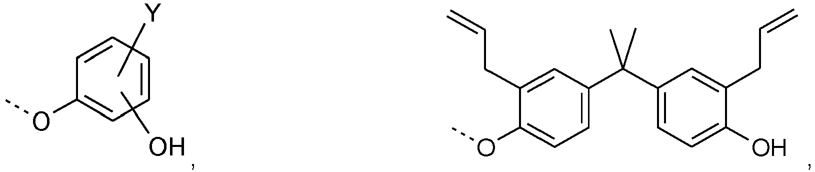

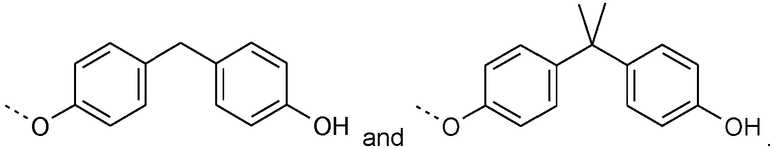

The radical Y in these formulae is a saturated, aromatic or olefinically unsaturated hydrocarbyl radical having 1 to 20 carbon atoms, more particularly having 1 to 15 carbon atoms. Preferred as Y are, in particular, allyl, methyl, nonyl, dodecyl, phenyl, alkyl ether, carboxylic ester or an unsaturated C₁₅ alkyl radical having 1 to 3 double bonds.

Most preferably R² is

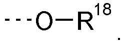

The terminally blocked polyurethane prepolymer of the formula (I) is prepared from the linear or branched polyurethane prepolymer, terminated by isocyanate groups, with one or more isocyanate-reactive compounds R²H. If two or more such isocyanate-reactive compounds are used, the reaction may take place sequentially or with a mixture of these compounds.

The reaction preferably takes place such that the one or more isocyanate-reactive compounds R²H are used stoichiometrically or in a stoichiometric excess, in order to ensure that all of the NCO groups have undergone reaction.

The polyurethane prepolymer having isocyanate end groups on which R¹ is based may be prepared from at least one diisocyanate or triisocyanate and also from a polymer **Q_{PM}** having terminal amino, thiol or hydroxyl groups and/or from an optionally substituted polyphenol **Q_{PP}**.

Suitable diisocyanates are aliphatic, cycloaliphatic, aromatic or araliphatic diisocyanates, especially commercial products such as methylenediphenyl diisocyanate (MDI), hexamethylene diisocyanate (HDI), toluene diisocyanate (TDI), tolidine diisocyanate (TODI), isophorone diisocyanate (IPDI), trimethylhexamethylene diisocyanate (TMDI), 2,5- or 2,6-bis(isocyanatomethyl)bicyclo[2.2.1]heptane, naphthalene 1,5-diisocyanate (NDI), dicyclohexylmethyl diisocyanate (H₁₂MDI), p-phenylene diisocyanate (PPDI), m-tetramethylxylylene diisocyanate (TMXDI), etc., and also their dimers. Preferred are HDI, IPDI, MDI or TDI.

Suitable triisocyanates are trimers or biurets of aliphatic, cycloaliphatic, aromatic or araliphatic diisocyanates, more particularly the isocyanurates and biurets of the diisocyanates described in the preceding paragraph. It is of course also possible to use suitable mixtures of di- or triisocyanates.

Particularly suitable as polymers **Q_{PM}** having terminal amino, thiol or hydroxyl groups are polymers **Q_{PM}** having two or three terminal amino, thiol or hydroxyl groups.

The polymers **Q_{PM}** advantageously have an equivalent weight of 300-6000, more particularly of 600-4000, preferably of 700-2200 g/equivalent of NCO-reactive groups.

Preferred polymers **Q_{PM}** are polyols having average molecular weights of between 600 and 6000 daltons, selected from the group consisting of polyethylene glycols, polypropylene glycols, polyethylene glycol-polypropylene glycol block polymers, polybutylene glycols, hydroxyl-terminated polybutadienes, hydroxyl-terminated butadiene-acrylonitrile copolymers, and mixtures thereof.

Especially preferred as polymers **Q_{PM}** are α,ω-dihydroxypolyalkylene glycols having C₂-C₆ alkylene groups or having mixed C₂-C₆ alkylene groups, which are terminated with amino, thiol or, preferably, hydroxyl groups. Particularly preferred are polypropylene glycols or polybutylene glycols. Further particularly preferred are hydroxyl-group-terminated polyoxybutylenes.

Especially suitable as polyphenol **Q_{PP}** are bis-, tris- and tetraphenols. The term refers not only to pure phenols, but instead also, where appropriate, to substituted phenols. The nature of the substitution can be very diverse. Understood more particularly by this is substitution directly on the aromatic ring system to which the phenolic OH group is bonded. Phenols, moreover, are not only monocyclic aromatics, but also polycyclic or fused aromatic or heteroaromatics, having the phenolic OH group directly on the aromatic or heteroaromatic moiety.

In one preferred embodiment, the polyurethane prepolymer is prepared from at least one diisocyanate or triisocyanate and also from one polymer **Q_{PM}** having terminal amino, thiol or hydroxyl groups. The polyurethane prepolymer is prepared in a manner known to the person skilled in the polyurethane art, more particularly by using the diisocyanate or triisocyanate in a stoichiometric excess in relation to the amino, thiol or hydroxyl groups of the polymer **Q_{PM}**.

The polyurethane prepolymer having isocyanate end groups is preferably elastic in nature. It preferably exhibits a glass transition temperature Tg of less than 0°C.

Surprisingly, it was found that the mentioned weight ratio **(D1/EFA)** in combination with the sum of the total amount of **(D1+EFA)** leads to a decrease in the reduction of the lap shear strength values after having applied the adhesive composition and storing it (open time) for a week at 40°C/80% relative Humidity (rH) before cure compared to applying the adhesive composition and immediately curing it.

The weight ratio of the terminally blocked polyurethane polymer **D1** to the epoxy-functionalized fatty acid oligomer **EFA (D1/EFA)** is from 4 - 20. A weight ratio **(D1/EFA)** lower than 4 or higher than 20 did not lead to the surprising decrease in reduced (Difference LSS (%)) lap shear strength values after an open time of 1 week at 40°C/80%rH comparted to the initial values.

Preferably, the weight ratio of the terminally blocked polyurethane polymer **D1** to the epoxy-functionalized fatty acid oligomer **EFA (D1/EFA)** is from 4.5 - 15, preferably 4.5 - 10, more preferably 4.5 - 7.5. Such a weight ratio is advantageous with respect to high lap shear strength values, initially as well as after 1 week open time at 40°C/80% rH. Further advantageous is the reduction (Difference LSS (%)) of the lap shear strength values after an open time of 1 week at 40°C/80%rH comparted to the initial values. This is shown, for example, in table 1 and 2 in the comparison of E1 with E2 and with Ref. 4-Ref.6 as well as E3 with E4 and with Ref. 7-Ref.11.

The sum of the total amount of the terminally blocked polyurethane polymer **D1** to the epoxy-functionalized fatty acid oligomer **EFA (D1+EFA)** is from 10 - 17.5 wt.-%, based on the based on the total weight of the one-component thermosetting epoxy resin adhesive. It was found that a sum of the total amount **(D1+EFA)** of less than 10 wt.-% or more than 17.5 wt.-% did not lead to the surprising decrease in reduced (Difference LSS (%)) lap shear strength values after an open time of 1 week at 40°C/80%rH comparted to the initial values.

Preferably, the sum of the total amount of the terminally blocked polyurethane polymer **D1** to the epoxy-functionalized fatty acid oligomer **EFA (D1+EFA)** is from 10.5 - 15 wt.-%, preferably 10.5 - 13 wt.-%, more preferably 10 - 12 wt.-%, based on the based on the total weight of the one-component thermosetting epoxy resin adhesive. Such a weight ratio is advantageous with respect to high lap shear strength values, initially as well as after 1 week open time at 40°C/80% relative humidity (rH). Further advantageous is the reduction (Difference LSS (%)) of the lap shear strength values after an open time of 1 week at 40°C/80%rH comparted to the initial values. This is shown, for example, in table 1 and 2 in the comparison of E1 and E2 with E3 and E4 as well as E1-E4 with Ref.2-Ref.3, Ref.14-Ref.15 respectively.

The one-component thermosetting epoxy resin adhesive comprises f) less than 5 wt.-%, based on the total weight of the one-component thermosetting epoxy resin adhesive, of liquid rubbers **D2.** Preferably, the amount is less than 2.5 wt.-%, preferably less than 1.0 wt.-%, preferably less than 0.5 wt.-%, more preferably less than 0.1 wt.-%, based on the total weight of the one-component thermosetting epoxy resin adhesive. Most preferably, the one-component thermosetting epoxy resin adhesive is free of liquid rubbers **D2.**

In a first embodiment, this liquid rubber **D2** may be a carboxyl- or epoxide-terminated acrylonitrile/butadiene copolymer or a derivative thereof. Liquid rubbers of this kind are available commercially, for example, under the name Hypro/Hypox^{®} CTBN and CTBNX and ETBN from Emerald Performance Materials. Suitable derivatives are, in particular, elastomer-modified prepolymers containing epoxide groups, of the kind marketed commercially under the product line Polydis^{®}, especially from the product line Polydis^{®} 36.., by the company Struktol^{®} (Schill+Seilacher Group, Germany), or under the product line Albipox (Evonik, Germany).

In a second embodiment, this liquid rubber may be a polyacrylate liquid rubber, which is fully miscible with liquid epoxy resins and which separates only when the epoxy resin matrix is cured, to form microdroplets. Liquid polyacrylate rubbers of this kind are available, for example, under the designation 20208-XPA from Dow.

It is of course also possible to use mixtures of liquid rubbers, more particularly mixtures of carboxyl- or epoxide-terminated acrylonitrile/butadiene copolymers or of derivatives thereof.

Preferably, the liquid rubber **D2** is a carboxyl- or epoxide-terminated acrylonitrile/butadiene copolymer or a derivative thereof.

In one preferred embodiment, the one-component thermosetting epoxy resin adhesive further comprises at least one filler **F.** Preference here is given to mica, talc, kaolin, wollastonite, feldspar, syenite, chlorite, bentonite, montmorillonite, calcium carbonate (precipitated or ground), dolomite, quartz, silicas (fumed or precipitated), cristobalite, calcium oxide, aluminium hydroxide, magnesium oxide, hollow ceramic beads, hollow glass beads, hollow organic beads, glass beads, colour pigments. Particularly preferred are fillers selected from the group consisting of calcium carbonate, calcium oxide and fumed silicas.

The total fraction of the overall filler **F** is advantageously 10 - 55 weight- %, preferably 20 - 50 weight-%, most preferably 25 - 45 weight-%, based on the total weight of the epoxy resin adhesive.

The one-component thermosetting epoxy resin adhesive may comprise further constituents, especially stabilizers, particularly heat and/or light stabilizers, plasticizers, solvents, dyes and pigments, corrosion inhibitors, surfactants, defoamers and adhesion promoters.

The one-component thermosetting epoxy resin adhesive has a viscosity of 500 to 5000 Pas at 25°C. Preferably, the viscosity is from 500 to 2000 Pas, 500 to 1500 Pas, preferably 500 to 1300 Pas at 25°C. The viscosity is determined oscillographically by means of a rheometer with heatable plate (MCR 301, AntonPaar) (slot 1000 µm, measuring plate diameter: 25 mm (plate/plate), deformation 0.01 at 5 Hz, temperature: 25°C).

A particularly preferred thermosetting one-component epoxy resin adhesive comprises:
- 25 -70 wt.-%, 30 -60 wt.-%, 35 - 55 wt.-%, more preferably 40 -50 wt.-%, based on the total weight of the one-component thermosetting epoxy resin adhesive, of at least one epoxy resin **A,**
- preferably 1.5 - 7.5 wt.-%, more particularly 2 - 5 wt.-%, 2 - 3 wt.-%, based on the total weight of the one-component thermosetting epoxy resin adhesive, of at least one epoxy-bearing reactive diluent **G;**
- 1-8 wt%, more particularly 2-6 wt%, based on the total weight of the one-component thermosetting epoxy resin adhesive, of at least one latent hardener **B** for epoxy resins, more particularly dicyandiamide;
- preferably 0.05 - 2 wt.-%, more particularly 0.1 - 1 wt.-%, more preferably 0.15 - 0.5 wt.-%, based on the total weight of the one-component thermosetting epoxy resin adhesive, of at least one accelerator **C** for epoxy resins;
- at least one epoxy-functionalized fatty acid oligomer **EFA,** preferably a dimer fatty acid having from 32 to 45 carbon atoms and from 1.9 to 2.5 carboxyl groups per molecule in which the carboxylic acid groups have been capped with a polyepoxide;
- at least at least one terminally blocked polyurethane polymer **D1,** preferably a terminally blocked polyurethane prepolymer of the formula (I);
- less than 1.0 wt.-%, preferably less than 0.5 wt.-%, more preferably less than 0.1 wt.-%, based on the total weight of the one-component thermosetting epoxy resin adhesive, of a crystalline or semi-crystalline polyester polyol **PP** having a hydroxyl equivalent weight of from 500 to 10,000, preferably from 1000 to 4000, and which preferably has a crystalline melting temperature of from 40 to 125°C;
- less than 2.5 wt.-%, preferably less than 1.0 wt.-%, preferably less than 0.5 wt.-%, more preferably less than 0.1 wt.-%, based on the total weight of the one-component thermosetting epoxy resin adhesive, of liquid rubbers **D2,** preferably a carboxyl- or epoxide-terminated acrylonitrile/butadiene copolymer or a derivative thereof;
- preferably 10 - 55 weight-%, preferably 20 - 50 weight-%, most preferably 25 - 45 weight-%, based on the total weight of the one-component thermosetting epoxy resin adhesive, of a filler **F** selected from the group consisting of calcium carbonate, calcium oxide and fumed silicas.

The weight ratio of the terminally blocked polyurethane polymer **D1** to the epoxy-functionalized fatty acid oligomer **EFA (D1/EFA)** is from 4.5 - 15, preferably 4.5 - 10, more preferably 4.5 - 7.5, and the sum of the total amount of the terminally blocked polyurethane polymer **D1** to the epoxy-functionalized fatty a based on the total weight of the one-component thermosetting epoxy resin adhesive acid oligomer **EFA (D1+EFA)** is from 10.5 - 15 wt.-%, preferably 10.5 - 13 wt.-%, more preferably 10 - 12 wt.-%, based on the based on the total weight of the one-component thermosetting epoxy resin adhesive.

Preferably, the thermosetting one-component epoxy resin adhesive has a viscosity of 500 to 2000 Pas, 500 to 1500 Pas, preferably 500 to 1300 Pas at 25°C.

It may further be advantageous if the preferred one-component thermosetting epoxy resin adhesive consists to an extent of more than 80 weight%, preferably more than 90 weight%, more particularly more than 95 weight%, especially preferably more than 98 weight%, most preferably more than 99 weight%, based on the total weight of the epoxy resin adhesive, of the aforementioned constituents.

It is advantageous when the cured (30 min at 180°C) one-component thermosetting epoxy resin adhesive of the invention, 1 week after application of the adhesive on the test specimen and storage at 40 °C/80 % humidity, displays the following lap shear strength, preferably measured according to the LSS protocol from experimental part: ≥ 23 MPa, preferably ≥ 25 MPa, ≥ 27 MPa, most preferably ≥ 28 MPa.

It is further advantageous when the reduction (Difference LSS (%)) of the lap shear strength values of the cured (30 min at 180°C) one-component thermosetting epoxy resin adhesive after an open time of 1 week at 40°C/80%rH comparted to the initial values is less than 18 %, preferably less than 16 %, more preferably less than 12 %, most preferred less than 5 %. The lap shear strength is determined as mentioned before.

Adhesives of this kind are needed for the bonding of heat-stable materials. By heat-stable materials are meant materials which are dimensionally stable, at least during the cure time, at a curing temperature of 100-220°C, preferably 120-200°C. They are, more particularly, metals and plastics such as ABS, polyamide, polyphenylene ethers, compounded materials such as SMC, unsaturated polyesters GRP and composite epoxide or acrylate materials. Particularly heat-stable plastics, furthermore, are polysulfones or polyethersulfones.

A preferred application is when at least one material is a metal.

Considered a particularly preferred use is the adhesive bonding of identical or different metals, particularly in body construction within the automotive industry. The preferred metals are, in particular, steel, especially electrolytically galvanized, hot dip galvanized, oiled steel, Bonazinc-coated steel, and subsequently phosphated steel, and also aluminium, particularly in the versions typically encountered in car making.

Such an adhesive is especially contacted first with the materials to be bonded at a temperature of between 10°C and 80°C, especially between 10°C and 60°C, and later cured at a temperature of typically 130-220°C, preferably 140-180°C, more preferably 150-170°C. Preferably, the time between contacting the adhesive with the materials to be bonded and the curing at a temperature of typically 130-220°C is 1 week or more, preferably between 1 week and 8 weeks.

A further aspect of the present invention relates to a method of bonding heat-stable substrates, comprising the steps of:
i) applying a thermosetting epoxy resin adhesive as described in detail above to the surface of a heat-stable substrate **S1,** especially of a metal;
ii) contacting the thermosetting epoxy resin adhesive applied with the surface of a further heat-stable substrate **S2,** especially of a metal;
iii) heating the thermosetting epoxy resin adhesive to a temperature of 100-220°C, especially of 120-210°C, preferably between 130 and 190°C, 140 and 180°C more preferably between 150 and 170°C.

The substrate **S2** here consists of the same material as or a different material than the substrate **S1.**

The substrates **S1** and/or **S2** are especially the aforementioned metals and plastics.

Preferably, in step iii) heating the thermosetting epoxy resin adhesive to a temperature of 100-220°C, especially of 120-210°C, preferably between 130 and 190°C, 140 and 180°C more preferably between 150 and 170°C, the composition is left at the aforementioned temperature for 10 min - 6 h, 10 min - 2 h, 10 min - 60 min, 10 min - 30 min, 10 min - 20 min, more preferably 10 min - 15 min.

Preferably, the time between step ii) and iii), is 1 week or more, preferably between 1 week and 8 weeks. More preferred, the thermosetting epoxy resin adhesive is stored for this time at 23 °C or more, more preferred at 40 °C or more, at a relative humidity of 50 % or more, preferably 80 % or more.

Such a method of bonding heat-stable materials results in an adhesive-bonded article. Such an article is preferably a motor vehicle or part of a motor vehicle.

A further aspect of the present invention is therefore an adhesive-bonded article obtained from the aforementioned method. In addition, the compositions of the invention are suitable not just for automobile construction but also for other fields of use. Particular mention should be made of related applications in the transportation sector such as ships, trucks, buses or rail vehicles, or in the construction of consumer goods, for example washing machines.

The materials adhesive-bonded by means of a composition of the invention are used at temperatures between typically 120°C and -40°C, preferably between 100°C and -40°C, especially between 80°C and -40°C.

One particularly preferred use of the thermosetting epoxy resin adhesive of the invention is the use thereof as a thermosetting body construction adhesive in vehicle construction.

A further particularly preferred use of the thermosetting epoxy resin adhesive of the invention is the use thereof for adhesively bonding metal structures.

A further aspect of the present invention therefore relates to a cured epoxy resin adhesive which is obtained by the heating of a thermosetting epoxy resin adhesive, described in detail above, to a temperature of 100-220°C, preferably 120-210°C.

After passing through a CEC bath, the bodywork enters a CEC oven, where the CEC coating material is baked at a temperature of typically 160 to 190°C. The thermosetting composition reacts here chemically with crosslinking, leading to the curing of the adhesive.

The invention is elucidated further in the text below by means of examples which, however, are not intended to restrict the invention in any way.

### Examples

Test methods used for the testing of the respective properties in the examples were as follows:

### Lap shear strength

The test samples for the lap shear test were prepared based on the method "CSQP 580-1". The test samples were determined using the following set-up:
Aging (if not initial value): 1 week at 40°C and 80% rH
Substrates: HDG (DX51, 1.5 mm), 100 x 25 mm
Degreasing: Heptane
Greasing: Anticorit PL 3802-39S
Overlap: 10 mm
Adhesive layer thickness: 0.2 mm (Glass beads)
Curing: 30 min at 180°C
Testing speed and climate: 10 mm/min, 25°C at 50% relative humidity

### Testing examples

The base formulation used for epoxy resin adhesives was a formulation as described below.

| | **Raw material used** |
|---|---|
| Epoxy | Liquid epoxy resin of formula (II), DER 331 (DOW) |
| EFA | SQE-172, 25 wt.-% of dimer acid modified epoxy resin in liquid epoxy resin, EEW(g/eq) 600-700, Chemical Co., Ltd. |
| D1 | Terminally blocked polyurethane polymer D1 of formula (I) |
| Dicy | Latent hardener **B,** dicyandiamide |
| Urea | Accelerator **C** for epoxy resins, substituted urea |
| Filler | Calcium carbonate |

**Table 1**

| | **Ref.1** | **Ref.2** | **Ref.3** | **Ref.4** | **Ref.5** | **E1** | **E2** | **Ref.6** | **Ref.7** | **Ref.8** |
|---|---|---|---|---|---|---|---|---|---|---|
| Epoxy | 40.00 | 40.00 | 40.00 | 40.00 | 40.00 | 40.00 | 40.00 | 40.00 | 40.00 | 40.00 |
| EFA | 0.00 | 1.00 | 4.00 | | 1.50 | 3.00 | 6.00 | 12.00 | | 1.00 |
| D1 | 10.00 | 9.00 | 6.00 | 15.00 | 13.50 | 12.00 | 9.00 | 3.00 | 20.00 | 19.00 |
| Dicy | 3.02 | 3.05 | 3.11 | 3.02 | 3.06 | 3.09 | 3.16 | 3.29 | 3.02 | 3.05 |
| Urea | 0.17 | 0.17 | 0.18 | 0.17 | 0.17 | 0.18 | 0.18 | 0.19 | 0.17 | 0.17 |
| Filler | 46.80 | 46.78 | 46.71 | 41.80 | 41.77 | 41.73 | 41.66 | 41.52 | 36.80 | 36.78 |
| **Total (wt.-%)** | 99.99 | 100.00 | 100.00 | 99.99 | 100.00 | 100.00 | 100.00 | 100.00 | 99.99 | 100.00 |
| Wt.-% FA | 0.00 | 0.25 | 1.00 | 0.00 | 0.38 | 0.75 | 1.50 | 3.00 | 0.00 | 0.25 |
| | | | | | | | | | | |
| LSS, initial (Mpa) | 28.4 | 30.63 | 32.87 | 28.33 | 28.33 | 29.33 | 28.67 | 34.67 | 25.6 | 25.03 |
| LSS, 1w 40°C/80%rH (Mpa) | 25.37 | 26.6 | 29.23 | 22.3 | 23.73 | 25.07 | 28.03 | 28.87 | 20.5 | 20.83 |
| Difference LSS, initial vs. storage (%) | -11 | -13 | -11 | -21 | -16 | -15 | -2 | -17 | -20 | -17 |
| Difference to control with no EFA (%) | - | 123 | 103 | - | 76 | 68 | 10 | 79 | - | 84 |
| Ratio EFA/D1 | - | 0.03 | 0.17 | 0.00 | 0.03 | 0.06 | 0.17 | 1.00 | 0.00 | 0.01 |
| Sum EFA+D1 | 10.00 | 9.25 | 7.00 | 15.00 | 13.88 | 12.75 | 10.50 | 6.00 | 20.00 | 19.25 |

**Table 2**

| | **Ref.9** | **E3** | **E4** | **Ref.10** | **Ref.11** | **Ref.12** | **Ref.13** | **Ref.14** | **Ref.15** | **Ref.16** |
|---|---|---|---|---|---|---|---|---|---|---|
| Epoxy | 40.00 | 40.00 | 40.00 | 40.00 | 40.00 | 40.00 | 40.00 | 40.00 | 40.00 | 40.00 |
| EFA | 2.00 | 4.00 | 8.00 | 10.00 | 12.00 | | 2.50 | 5.00 | 10.00 | 20.00 |
| D1 | 18.00 | 16.00 | 12.00 | 10.00 | 8.00 | 25.00 | 22.50 | 20.00 | 15.00 | 5.00 |
| Dicy | 3.07 | 3.11 | 3.20 | 3.25 | 3.29 | 3.02 | 3.08 | 3.14 | 3.25 | 3.47 |
| Urea | 0.18 | 0.18 | 0.18 | 0.19 | 0.19 | 0.17 | 0.18 | 0.18 | 0.19 | 0.20 |
| Filler | 36.76 | 36.71 | 36.61 | 36.57 | 36.52 | 31.80 | 31.74 | 31.68 | 31.57 | 31.33 |
| **Total (wt.-%)** | 100.01 | 100.00 | 99.99 | 100.01 | 100.00 | 99.99 | 100.00 | 100.00 | 100.01 | 100.00 |
| Wt.-% FA | 0.50 | 1.00 | 2.00 | 2.50 | 3.00 | 0.00 | 0.63 | 1.25 | 2.50 | 5.00 |
| | | | | | | | | | | |
| LSS, initial (Mpa) | 26.57 | 28.27 | 30 | 34.03 | 34.93 | 19.57 | 20.93 | 26.03 | 26.67 | 35.83 |
| LSS, 1w 40°C/80%rH (Mpa) | 21.03 | 23.9 | 27.13 | 25.23 | 28.33 | 16.73 | 17.93 | 20.4 | 21.95 | 29.8 |
| Difference LSS, initial vs. storage (%) | -21 | -15 | -10 | -26 | -19 | -14 | -14 | -22 | -18 | -17 |
| Difference to control with no EFA (%) | 105 | 78 | 48 | 130 | 95 | - | 99 | 149 | 122 | 116 |
| Ratio EFA/D1 | 0.03 | 0.06 | 0.17 | 0.25 | 0.38 | 0.00 | 0.03 | 0.06 | 0.17 | 1.00 |
| Sum EFA+D1 | 18.50 | 17.00 | 14.00 | 12.50 | 11.00 | 25.00 | 23.13 | 21.25 | 17.50 | 10.00 |

## Claims

1. One-component thermosetting epoxy resin adhesive, comprising
a) at least one epoxy resin A of the formula (II) 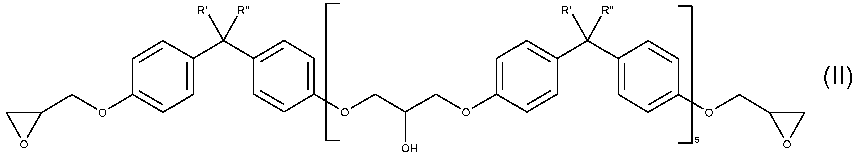 wherein the substituents R' and R" independently of one another are either H or CH₃ and the index s has a value of 0 - 12, preferably 0 - 1, the fraction of the epoxy resin **A** being from 25 - 70 wt.-%, based on the total weight of the one-component thermosetting epoxy resin adhesive; and
b) at least one epoxy-functionalized fatty acid oligomer **EFA;** and
c) at least one latent hardener **B** for epoxy resins; and
d) preferably at least one accelerator C for epoxy resins; and
e) at least one terminally blocked polyurethane polymer **D1;**
f) less than 5 wt.-%, based on the total weight of the one-component thermosetting epoxy resin adhesive, of liquid rubbers **D2;** and
g) less than 1.5 wt.-%, based on the total weight of the one-component thermosetting epoxy resin adhesive, of a crystalline or semi-crystalline polyester polyol **PP** having a hydroxyl equivalent weight of from 500 to 10,000;
wherein the weight ratio of the terminally blocked polyurethane polymer **D1** to the epoxy-functionalized fatty acid oligomer **EFA (D1/EFA)** is from 4 - 20 and the sum of the total amount of the terminally blocked polyurethane polymer **D1** and the epoxy-functionalized fatty acid oligomer **EFA (D1+EFA)** is from 10 - 17.5 wt.-%, based on the total weight of the one-component thermosetting epoxy resin adhesive.

2. One-component thermosetting epoxy resin adhesive according to claim 1, wherein wherein the weight ratio of the terminally blocked polyurethane polymer D1 to the epoxy-functionalized fatty acid oligomer EFA (D1/EFA) is from 4.5 - 15, preferably 4.5 - 10, more preferably 4.5 - 7.5.

3. One-component thermosetting epoxy resin adhesive according to claim 1 or 2, wherein the sum of the total amount of the terminally blocked polyurethane polymer **D1** to the epoxy-functionalized fatty a based on the total weight of the one-component thermosetting epoxy resin adhesive acid oligomer **EFA (D1+EFA)** is from 10.5 - 15 wt.-%, preferably 10.5 - 13 wt.- %, more preferably 10 - 12 wt.-%, based on the based on the total weight of the one-component thermosetting epoxy resin adhesive.

4. One-component thermosetting epoxy resin adhesive according to any of the preceding claims, wherein the fraction of the epoxy resin **A** of the formula (II) is from 25 -70 wt.-%, 30 -60 wt.-%, 35 - 55 wt.-%, more preferably 40 -50 wt.-%, based on the total weight of the one-component thermosetting epoxy resin adhesive.

5. One-component thermosetting epoxy resin adhesive according to any of the preceding claims, wherein in the epoxy resin **A** the substituents R' and R" are CH₃ and the index s has a value of 0 - 1, preferably 0 - 0.2.

6. One-component thermosetting epoxy resin adhesive according to any of the preceding claims, wherein the latent hardener is selected from dicyandiamide, guanamines, guanidines, aminoguanidines and derivatives thereof, substituted ureas, imidazoles and amine complexes, preferably dicyandiamide.

7. One-component thermosetting epoxy resin adhesive according to any of the preceding claims, wherein the accelerator **C** for epoxy resins is is selected from the list consisting of substituted ureas, imidazoles, imidazolines and blocked amines, preferably substituted ureas.

8. One-component thermosetting epoxy resin adhesive according to any of the preceding claims, wherein the epoxy-functionalized fatty acid oligomer **EFA** is a dimer fatty acid having from 32 to 45 carbon atoms and from 1.9 to 2.5 carboxyl groups per molecule in which the carboxylic acid groups have been capped with a polyepoxide, preferably an epoxy resin A of the formula (II).

9. One-component thermosetting epoxy resin adhesive according to any of the preceding claims, wherein the amount of liquid rubbers **D2** is less than 2.5 wt.-%, preferably less than 1.0 wt.-%, preferably less than 0.5 wt.-%, more preferably less than 0.1 wt.-%, based on the total weight of the one-component thermosetting epoxy resin adhesive.

10. One-component thermosetting epoxy resin adhesive according to any of the preceding claims, wherein the one-component thermosetting epoxy resin adhesive contains 10 - 55 weight-%, preferably 20 - 50 weight-%, most preferably 25 - 45 weight-%, based on the total weight of the epoxy resin adhesive, of at least one filler **F,** preferably selected from the group consisting of calcium carbonate, calcium oxide and fumed silicas.

11. One-component thermosetting epoxy resin adhesive according to any of the preceding claims, wherein the one-component thermosetting epoxy resin adhesive has a viscosity of 500 to 5000 Pas at 25°C, wherein the viscosity is determined according to the method outlined in the description.

12. Method for adhesively bonding heat-stable substrates, comprising the steps of
i) applying a thermosetting epoxy resin adhesive according to any of claims 1 to 11 to the surface of a heat-stable substrate **S1,** more particularly of a metal;
ii) contacting the applied thermosetting epoxy resin adhesive with the surface of a further heat-stable substrate **S2,** more particularly of a metal;
iii) heating the thermosetting epoxy resin adhesive to a temperature of 100-220°C, more particularly 120-210°C, preferably between 130 and 190°C, 140 and 180°C more preferably between 150 and 170°C;
wherein the substrate **S2** consists of the same material as or a different material to the substrate **S1.**

13. Method according to claim 12, wherein step iii) heating the thermosetting epoxy resin adhesive to a temperature of 100-220°C, especially of 120-210°C, preferably between 130 and 190°C, 140 and 180°C more preferably between 150 and 170°C, the thermosetting epoxy resin adhesive is left at the aforementioned temperature for 10 min - 6 h, 10 min - 2 h, 10 min - 60 min, 10 min - 30 min, 10 min - 20 min, more preferably 10 min - 15 min.

14. Method according to claim 12 or 13, wherein the time between step ii) and iii), is 1 week or more, preferably between 1 week and 8 weeks, and preferably, the thermosetting epoxy resin adhesive is stored for this time at 23 °C or more, more preferred at 40 °C or more, at a relative humidity of 50 % or more, preferably 80 % or more.

15. Method of using of a thermosetting epoxy resin adhesive according to any of claims 1 to 11 for adhesively bonding or strengthening metal structures or for strengthening filling of cavities in vehicle construction or sandwich panel construction.

## Patentansprüche

1. Einkomponentiger hitzehärtender Epoxidharzklebstoff, umfassend
a) mindestens ein Epoxidharz A der Formel (II) 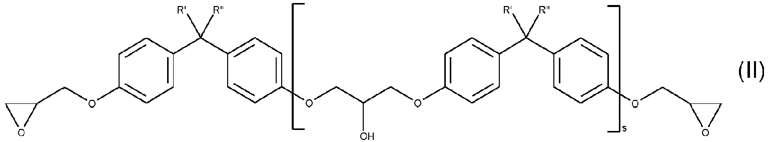 wobei die Substituenten R' und R" unabhängig voneinander entweder für H oder für CH₃ stehen und der Index s einen Wert von 0-12, vorzugsweise 0-1, aufweist, wobei der Anteil des Epoxidharzes A 25-70 Gew.-%, bezogen auf das Gesamtgewicht des einkomponentigen hitzehärtbaren Epoxidharzklebstoffs, beträgt; und
b) mindestens ein epoxidfunktionalisiertes Fettsäureoligomer EFA; and
c) mindestens einen latenten Härter B für Epoxidharze; und
d) vorzugsweise mindestens einen Beschleuniger C für Epoxidharze; und
e) mindestens ein endständig blockiertes Polyurethanpolymer D1;
f) weniger als 5 Gew.-%, bezogen auf das Gesamtgewicht des einkomponentigen hitzehärtbaren Epoxidharzklebstoffs, Flüssigkautschuke D2; und
g) weniger als 1,5 Gew.-%, bezogen auf das Gesamtgewicht des einkomponentigen hitzehärtbaren Epoxidharzklebstoffs, eines kristallinen oder teilkristallinen Polyesterpolyols PP mit einem Hydroxyläquivalentgewicht von 500 bis 10.000;
wobei das Gewichtsverhältnis des endständig blockierten Polyurethanpolymers D1 zu dem epoxidfunktionalisierten Fettsäureoligomer EFA (D1/EFA) 4-20 beträgt und die Summe der Gesamtmenge des endständig blockierten Polyurethanpolymers D1 und des epoxidfunktionalisierten Fettsäureoligomers EFA (D1+EFA) 10-17,5 Gew.-%, bezogen auf das Gesamtgewicht des einkomponentigen hitzehärtbaren Epoxidharzklebstoffs, beträgt.

2. Einkomponentiger hitzehärtender Epoxidharzklebstoff nach Anspruch 1, wobei das Gewichtsverhältnis des endständig blockierten Polyurethanpolymers D1 zu dem epoxidfunktionalisierten Fettsäureoligomer EFA (D1/EFA) 4,5-15, vorzugsweise 4,5-10, weiter bevorzugt 4,5-7,5, beträgt.

3. Einkomponentiger hitzehärtender Epoxidharzklebstoff nach Anspruch 1 oder 2, wobei die Summe der Gesamtmenge des endständig blockierten Polyurethanpolymers D1 und des epoxidfunktionalisierten Fettsäureoligomers EFA (D1+EFA) 10,5-15 Gew.-%, vorzugsweise 10,5-13 Gew.-%, weiter bevorzugt 10-12 Gew.-%, bezogen auf das Gesamtgewicht des einkomponentigen hitzehärtbaren Epoxidharzklebstoffs, beträgt.

4. Einkomponentiger hitzehärtender Epoxidharzklebstoff nach einem der vorhergehenden Ansprüche, wobei der Anteil des Epoxidharzes A der Formel (II) 25-70 Gew.-%, 30-60 Gew.-%, 35-55 Gew.-%, weiter bevorzugt 40-50 Gew.-%, bezogen auf das Gesamtgewicht des einkomponentigen hitzehärtbaren Epoxidharzklebstoffs, beträgt.

5. Einkomponentiger hitzehärtender Epoxidharzklebstoff nach einem der vorhergehenden Ansprüche, wobei in dem Epoxidharz A die Substituenten R' und R" für CH₃ stehen und der Index s einen Wert von 0-1, vorzugsweise 0-0,2, aufweist.

6. Einkomponentiger hitzehärtender Epoxidharzklebstoff nach einem der vorhergehenden Ansprüche, wobei der latente Härter B ausgewählt ist aus Dicyandiamid, Guanaminen, Guanidinen, Aminoguanidinen und deren Derivaten, substituierten Harnstoffen, Imidazolen und Amin-Komplexen, wobei Dicyandiamid bevorzugt ist.

7. Einkomponentiger hitzehärtender Epoxidharzklebstoff nach einem der vorhergehenden Ansprüche, wobei der Beschleuniger C für Epoxidharze ausgewählt ist aus der Liste bestehend aus substituierten Harnstoffen, Imidazolen, Imidazolinen und blockierten Aminen, vorzugsweise substituierten Harnstoffen.

8. Einkomponentiger hitzehärtender Epoxidharzklebstoff nach einem der vorhergehenden Ansprüche, wobei es sich bei dem epoxidfunktionalisierten Fettsäureoligomer EFA um eine Dimerfettsäure mit 32 bis 45 Kohlenstoffatomen und 1,9 bis 2,5 Carboxylgruppen pro Molekül handelt, wobei die Carbonsäuregruppen mit einem Polyepoxid, vorzugsweise einem Epoxidharz A der Formel (II), verkappt sind.

9. Einkomponentiger hitzehärtender Epoxidharzklebstoff nach einem der vorhergehenden Ansprüche, wobei die Menge an Flüssigkautschuken D2 weniger als 2,5 Gew.-%, vorzugsweise weniger als 1,0 Gew.-%, vorzugsweise weniger als 0,5 Gew.-%, weiter bevorzugt weniger als 0,1 Gew.-%, bezogen auf das Gesamtgewicht des einkomponentigen hitzehärtbaren Epoxidharzklebstoffs, beträgt.

10. Einkomponentiger hitzehärtender Epoxidharzklebstoff nach einem der vorhergehenden Ansprüche, wobei der einkomponentige hitzehärtbare Epoxidharzklebstoff 10-55 Gew.-%, vorzugsweise 20-50 Gew.-%, ganz besonders bevorzugt 25-45 Gew.-%, bezogen auf das Gesamtgewicht des Epoxidharzklebstoffs, mindestens eines Füllstoffs F enthält, der vorzugsweise aus der Gruppe bestehend aus Calciumcarbonat, Calciumoxid und pyrogenen Kieselsäuren ausgewählt ist.

11. Einkomponentiger hitzehärtender Epoxidharzklebstoff nach einem der vorhergehenden Ansprüche, wobei der einkomponentige hitzehärtbare Epoxidharzklebstoff eine Viskosität von 500 bis 5000 Pas bei 25 °C aufweist, wobei die Viskosität gemäß der in der Beschreibung angegebenen Methode bestimmt wird.

12. Verfahren zur Verklebung von hitzestabilen Substraten, umfassend die Schritte
i) Aufbringen eines hitzehärtenden Epoxidharzklebstoffs nach einem der Ansprüche 1 bis 11 auf die Oberfläche eines hitzestabilen Substrats S1, insbesondere eines Metalls;
ii) Inkontaktbringen des aufgebrachten hitzehärtenden Epoxidharzklebstoffs mit der Oberfläche eines weiteren hitzestabilen Substrats S2, insbesondere eines Metalls;
iii) Erhitzen des hitzehärtenden Epoxidharzklebstoffs auf eine Temperatur von 100-220 °C, insbesondere 120-210 °C, vorzugsweise zwischen 130 und 190 °C, 140 und 180 °C, weiter bevorzugt zwischen 150 und 170 °C;
wobei das Substrat S2 aus dem gleichen Material wie das Substrat S1 oder einem anderen Material besteht.

13. Verfahren nach Anspruch 12, wobei in Schritt iii) des Erhitzens des hitzehärtenden Epoxidharzklebstoffs auf eine Temperatur von 100-220 °C, insbesondere 120-210 °C, vorzugsweise zwischen 130 und 190 °C, 140 und 180 °C, weiter bevorzugt zwischen 150 und 170 °C, der hitzehärtende Epoxidharzklebstoff für 10 min-6 h, 10 min-2 h, 10 min-60 min, 10 min-30 min, 10 min-20 min, weiter bevorzugt 10 min-15 min, bei der vorgenannten Temperatur belassen wird.

14. Verfahren nach Anspruch 12 oder 13, wobei die Zeit zwischen Schritt ii) und iii) 1 Woche oder mehr beträgt und vorzugsweise zwischen 1 Woche und 8 Wochen liegt und der hitzehärtende Epoxidharzklebstoff über diesen Zeitraum bei 23 °C oder mehr, weiter bevorzugt bei 40 °C oder mehr, bei einer relativen Feuchtigkeit von 50 % oder mehr, vorzugsweise 80 % oder mehr, aufbewahrt wird.

15. Verfahren zur Verwendung eines hitzehärtenden Epoxidharzklebstoffs nach einem der Ansprüche 1 bis 11 zum Verkleben oder Verstärken von Metallstrukturen oder zum verstärkenden Verfüllen von Hohlräumen im Fahrzeugbau oder Sandwichpanelbau.

## Revendications

1. Adhésif de résine époxy thermodurcissable à un composant, comprenant
a) au moins une résine époxy A de formule (II) 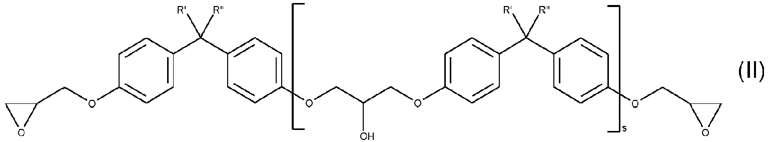 dans laquelle les substituants R' et R", indépendamment l'un de l'autre, sont soit H, soit CH₃ et l'indice s a une valeur de 0 à 12, de préférence 0 à 1, la fraction de la résine époxy A étant de 25 à 70 % en poids, sur la base du poids total de l'adhésif de résine époxy thermodurcissable à un composant ; et
b) au moins un oligomère d'acide gras fonctionnalisé par époxy EFA ; et
c) au moins un durcisseur latent B pour résines époxy ; et
d) de préférence au moins un accélérateur C pour résines époxy ; et
e) au moins un polymère de polyuréthane D1 bloqué de façon terminale ;
f) moins de 5 % en poids, sur la base du poids total de l'adhésif de résine époxy thermodurcissable à un composant, de caoutchoucs liquides D2 ; et
g) moins de 1,5 % en poids, sur la base du poids total de l'adhésif de résine époxy thermodurcissable à un composant, d'un polyester polyol PP cristallin ou semi-cristallin ayant un poids équivalent d'hydroxyle de 500 à 10 000 ;
dans lequel le rapport en poids du polymère de polyuréthane bloqué de façon terminale D1 sur l'oligomère d'acide gras fonctionnalisé par époxy EFA (D1/EFA) est de 4 à 20 et la somme de la quantité totale du polymère de polyuréthane bloqué de façon terminale D1 et de l'oligomère d'acide gras fonctionnalisé par époxy EFA (D1+EFA) est de 10 à 17,5 % en poids, sur la base du poids total de l'adhésif de résine époxy thermodurcissable à un composant.

2. Adhésif de résine époxy thermodurcissable à un composant selon la revendication 1, dans lequel le rapport pondéral du polymère de polyuréthane D1 bloqué de façon terminale sur l'oligomère d'acide gras fonctionnalité par époxy EFA (D1/EFA) est de 4,5 à 15, de préférence de 4,5 à 10, plus préférablement de 4,5 à 7,5.

3. Adhésif de résine époxy thermodurcissable à un composant selon la revendication 1 ou 2, dans lequel la somme de la quantité totale du polymère de polyuréthane D1 bloqué de façon terminale par rapport au poids total de l'oligomère d'acide gras fonctionnalisé par époxy (D1+EFA) est de 10,5 à 15 % en poids, de préférence de 10,5 à 13 % en poids, mieux encore de 10 à 12 % en poids, par rapport au poids total de l'adhésif de résine époxy thermodurcissable à un composant.

4. Adhésif de résine époxy thermodurcissable à un composant selon l'une quelconque des revendications précédentes, dans lequel la fraction de la résine époxy A de formule (II) est de 25 à 70 % en poids, de 30 à 60 % en poids, de 35 à 55 % en poids, plus préférablement de 40 à 50 % en poids, par rapport au poids total de l'adhésif de résine époxy thermodurcissable à un composant.

5. Adhésif de résine époxy thermodurcissable à un composant selon l'une quelconque des revendications précédentes, dans lequel dans la résine époxy A les substituants R' et R" sont CH₃ et l'indice s a une valeur de 0 à 1, de préférence de 0 à 0,2.

6. Adhésif de résine époxy thermodurcissable à un composant selon l'une quelconque des revendications précédentes, dans lequel le durcisseur latent est choisi parmi le dicyandiamide, les guanamines, les guanidines, les aminoguanidines et leurs dérivés, les urées substituées, les imidazoles et les complexes d'amines, de préférence le dicyandiamide.

7. Adhésif de résine époxy thermodurcissable à un composant selon l'une quelconque des revendications précédentes, dans lequel l'accélérateur C pour les résines époxy est choisi dans la liste constituée par les urées substituées, imidazoles, imidazolines et amines bloquées, de préférence les urées substituées.

8. Adhésif de résine époxy thermodurcissable à un composant selon l'une quelconque des revendications précédentes, dans lequel l'oligomère d'acide gras fonctionnalisé par époxy EFA est un acide gras dimère ayant de 32 à 45 atomes de carbone et de 1,9 à 2,5 groupes carboxyle par molécule dans lequel les groupes acide carboxylique ont été coiffés par un polyépoxyde, de préférence une résine époxy A de formule (II).

9. Adhésif de résine époxy thermodurcissable à un composant selon l'une quelconque des revendications précédentes, dans lequel la quantité de caoutchoucs liquides D2 est inférieure à 2,5 % en poids, de préférence inférieure à 1,0 % en poids, de préférence inférieure à 0,5 % en poids, plus préférentiellement inférieure à 0,1 % en poids, par rapport au poids total de l'adhésif de résine époxy thermodurcissable à un composant.

10. Adhésif de résine époxy thermodurcissable à un composant selon l'une quelconque des revendications précédentes, dans lequel l'adhésif de résine époxy thermodurcissable à un composant contient 10 à 55 % en poids, de préférence 20 à 50 % en poids, mieux encore 25 à 45 % en poids, par rapport au poids total de l'adhésif de résine époxy, d'au moins une charge F, de préférence choisie dans le groupe constitué par le carbonate de calcium, l'oxyde de calcium et les silices fumées.

11. Adhésif de résine époxy thermodurcissable à un composant selon l'une quelconque des revendications précédentes, dans lequel l'adhésif de résine époxy thermodurcissable à un composant a une viscosité de 500 à 5 000 Pas à 25 °C, la viscosité étant déterminée selon le procédé décrit dans la description.

12. Procédé de liaison de manière adhésive de substrats stables à la chaleur, comprenant les étapes de
i) application d'un adhésif de résine époxy thermodurcissable selon l'une quelconque des revendications 1 à 11 sur la surface d'un substrat stable à la chaleur S1, plus particulièrement d'un métal ;
ii) mise en contact de l'adhésif de résine époxy thermodurcissable appliqué avec la surface d'un autre substrat S2 stable à la chaleur, plus particulièrement d'un métal ;
iii) chauffage de l'adhésif de résine époxy thermodurcissable jusqu'à une température de 100-220 °C, plus particulièrement de 120-210 °C, de préférence entre 130 et 190 °C, 140 et 180 °C, plus préférablement entre 150 et 170 °C ;
dans lequel le substrat S2 est constitué du même matériau que le substrat S1 ou d'un matériau différent.

13. Procédé selon la revendication 12, dans lequel dans l'étape iii) chauffage de l'adhésif de résine époxy thermodurcissable jusqu'à une température de 100-220 °C, notamment de 120-210 °C, préférablement entre 130 et 190 °C, 140 et 180 °C, plus préférablement entre 150 et 170 °C, l'adhésif de résine époxy thermodurcissable est laissé à la température susmentionnée pendant 10 min - 6 h, 10 min - 2 h, 10 min - 60 min, 10 min - 30 min, 10 min - 20 min, plus préférentiellement 10 min - 15 min.

14. Procédé selon la revendication 12 ou 13, dans lequel le temps entre l'étape ii) et l'étape iii) est de 1 semaine ou plus, de préférence entre 1 semaine et 8 semaines, et de préférence, l'adhésif de résine époxy thermodurcissable est stocké pendant ce temps à 23 °C ou plus, plus préférablement à 40 °C ou plus, à une humidité relative de 50 % ou plus, de préférence 80 % ou plus.

15. Procédé d'utilisation d'un adhésif de résine époxy thermodurcissable selon l'une quelconque des revendications 1 à 11 pour lier de manière adhésive ou renforcer des structures métalliques ou pour renforcer le remplissage de cavités dans la construction de véhicules ou dans la construction de panneaux en sandwich.
